(19) **Europäisches Patentamt**
**European Patent Office**
**Office européen des brevets**

(11) **EP 4 575 580 A1**

(12) **EUROPEAN PATENT APPLICATION**
published in accordance with Art. 153(4) EPC

(43) Date of publication:
**25.06.2025 Bulletin 2025/26**

(21) Application number: **22956891.0**

(22) Date of filing: **31.08.2022**

(51) International Patent Classification (IPC):
**G01S 19/07** *(2010.01)* **H04L 27/00** *(2006.01)*

(52) Cooperative Patent Classification (CPC):
**G01S 19/07; H04L 27/00**

(86) International application number:
**PCT/CN2022/116274**

(87) International publication number:
**WO 2024/045063 (07.03.2024 Gazette 2024/10)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicant: **Shenzhen Yinwang Intelligent Technologies Co., Ltd.**
**Shenzhen, Guangdong 518129 (CN)**

(72) Inventor: **KONG, Xiangxu**
**Shenzhen, Guangdong 518129 (CN)**

(74) Representative: **MERH-IP Matias Erny Reichl Hoffmann**
**Patentanwälte PartG mbB**
**Paul-Heyse-Straße 29**
**80336 München (DE)**

(54) **POSITIONING METHOD AND APPARATUS**

(57) This application discloses a positioning method and apparatus, to improve accuracy of ionospheric error estimation. A network device obtains a first original observation and a second original observation, where the first original observation is from a mobile device, and the second original observation is from a reference station; determines an ionospheric error of a virtual reference station based on the first original observation and the second original observation, and determines assisted positioning information based on the ionospheric error; and sends the assisted positioning information to a to-be-positioned device. In this solution, the network device may determine the ionospheric error of the virtual reference station based on the original observation of the reference station and the original observation of the mobile device. In this way, more original observations are used by the network device to construct the virtual reference station. In addition, because the mobile device has mobility, the original observations used by the network device to construct the virtual reference station also have good dynamic performance. Therefore, accuracy of ionospheric error estimation can be improved.

FIG. 4

EP 4 575 580 A1

**Description**

## TECHNICAL FIELD

This application relates to the field of communications technologies, and in particular, to a positioning method and apparatus.

## BACKGROUND

The ionosphere interferes with the propagation of electromagnetic waves, and this is one of error sources of satellite navigation and positioning. Currently, most vehicles eliminate this error based on assisted positioning information provided by a cloud service platform of a positioning service provider. For example, the cloud service platform of the positioning service provider calculates an ionospheric error of an area in which a vehicle is located, then determines assisted positioning information based on the ionospheric error, and sends the assisted positioning information to the vehicle. When performing positioning, the vehicle performs positioning calculation based on an original observation and a navigation message that are obtained by the vehicle and in combination of the assisted positioning information, to eliminate impact of the ionospheric error.

In the current technology, the cloud platform of the positioning service provider calculates the ionospheric error based on an original observation provided by a reference station. Therefore, there is a problem that the ionospheric error is not accurately estimated.

## SUMMARY

Embodiments of this application provide a positioning method and apparatus, to improve accuracy of ionospheric error estimation.

According to a first aspect, a positioning method is provided. The method may be applied to a network device or a chip in a network device. An example in which the method is applied to the network device is used. The method includes: The network device obtains a first original observation and a second original observation, where the first original observation is from a mobile device, and the second original observation is from a reference station; the network device determines an ionospheric error of a virtual reference station based on the first original observation and the second original observation, and determines assisted positioning information based on the ionospheric error; and the network device sends the assisted positioning information to a to-be-positioned device.

In this embodiment of this application, in addition to the reference station, the mobile device may provide an original observation (namely, the first original observation) of the mobile device for the network device for use, so that the network device can determine the ionospheric error of the virtual reference station based on an original observation of the reference station and the original observation of the mobile device. In this way, more original observations (which are all actual observation data) are used by the network device to construct the virtual reference station, so that accuracy of ionospheric error estimation can be improved. In addition, because the mobile device has mobility, the original observations used by the network device to construct the virtual reference station also have good dynamic performance, so that accuracy of ionospheric error estimation can be further improved. In a possible design, that the network device determines an ionospheric error of a virtual reference station based on the first original observation and the second original observation includes: The network device constructs an ionospheric error model based on the second original observation and a location of the reference station; and determines the ionospheric error of the virtual reference station based on the first original observation and the ionospheric error model.

In this design, the first original observation is used by the network device to construct the ionospheric error of the virtual reference station, so that accuracy of the ionospheric error of the virtual reference station can be improved.

In a possible design, the network device constructs an ionospheric error model based on the first original observation, the second original observation, and a location of the reference station; and determines the ionospheric error of the virtual reference station based on the ionospheric error model.

In this design, the first original observation is used by the network device to construct the ionospheric error model, so that accuracy of the ionospheric error model can be improved. Therefore, when the ionospheric error of the virtual reference station is determined based on the ionospheric error model, accuracy of the ionospheric error of the virtual reference station can also be correspondingly improved.

In a possible design, the ionospheric error model is further constructed based on ephemeris information that is from the reference station. For example, the network device constructs an ionospheric error model based on the ephemeris information, the first original observation, the second original observation, and a location of the reference station; or the network device constructs an ionospheric error model based on the ephemeris information, the second original observation, and a location of the reference station. The ephemeris information may be from the reference station.

In this design, the ionospheric error of the virtual reference station is further determined based on the ephemeris information of the reference station, so that accuracy of the ionospheric error of the virtual reference station can be further improved.

In a possible design, the first original observation includes an original observation of a dual-band global navigation satellite system GNSS signal and/or an original observation of a tri-band GNSS signal.

In a possible design, the first original observation includes the original observation of the dual-band GNSS signal and the original observation of the tri-band GNSS signal. If a time of the original observation of the tri-band GNSS signal is within a preset time range, the network device determines the ionospheric error of the virtual reference station based on the original observation of the tri-band GNSS signal and the second original observation; or, if a time of the original observation of the tri-band GNSS signal is not within a preset time range, and a time of the original observation of the dual-band GNSS signal is within the preset time range, the network device determines the ionospheric error of the virtual reference station based on the original observation of the dual-band GNSS signal and the second original observation.

In this design, when the network device obtains both the original observation of the dual-band GNSS signal and the tri-band GNSS signal, the original observation of the tri-band GNSS signal may be preferentially used to determine the ionospheric error of the virtual reference station, so that accuracy of ionospheric error estimation can be further improved.

In a possible design, the to-be-positioned device is the mobile device.

In this design, the to-be-positioned device may report the first original observation as the mobile device, so that the network device can construct the virtual reference station based on the original observation of the to-be-positioned device, thereby further improving accuracy of ionospheric error estimation.

In a possible design, a distance between the virtual reference station and the mobile device is less than a preset distance. The preset distance may be set to a maximum distance of a converged solution obtained based on an RTK algorithm, for example, may be 10 km.

This design can ensure that the first original observation used for ionospheric error estimation is an original observation near the virtual reference station, so that accuracy of the ionospheric error of the virtual reference station is improved.

In a possible design, the network device may further obtain location information of the mobile device; and the network device determines, based on the location information of the mobile device, that the distance between the virtual reference station and the mobile device is less than the preset distance.

In this design, the mobile device does not need to provide highly accurate location information, and only needs to provide approximate location information. The solution is easily implemented.

In a possible design, the location information of the mobile device is at an accuracy level of meters.

In a possible design, a location of the virtual reference station is determined based on the location of the reference station. For example, a location of one virtual reference station may be determined for every several (for example, three) adjacent reference stations.

The design can improve reliability of data construction of the virtual reference station.

In a possible design, the first original observation includes one or more of a pseudorange, a carrier phase, and a receive frequency. It may be understood that the transmit frequency is for a receiver, and may also be referred to as a transmit frequency from a perspective of a transmitter (for example, a satellite).

Certainly, the foregoing is merely an example rather than a specific limitation.

In a possible design, the mobile device is one or more of a vehicle, an uncrewed aerial vehicle, a helicopter, an airplane, and a ship.

Certainly, the foregoing is merely an example rather than a limitation. In actual application, the mobile device may also be another removable device having a satellite positioning capability.

According to a second aspect, a positioning method is provided. The method may be applied to a mobile device or a chip in a mobile device. An example in which the method is applied to the mobile device is used. The method includes: The mobile device receives a satellite signal, and determines a first original observation based on the satellite signal; and the mobile device sends the first original observation to a network device, where the first original observation is used to determine an ionospheric error of a virtual reference station.

In a possible design, if the mobile device is a to-be-positioned device (that is, when the to-be-positioned device sends the first original observation of the to-be-positioned device to the network device), the mobile device may further receive assisted positioning information from the network device, and perform positioning on the mobile device based on the assisted positioning information.

In a possible design, the first original observation includes one or more of a pseudorange, a carrier phase, and a receive frequency.

In a possible design, the mobile device is one or more of a vehicle, an uncrewed aerial vehicle, a helicopter, an airplane, and a ship.

According to a third aspect, a positioning apparatus is provided, where the apparatus includes a module/unit/technical means for implementing the method according to any one of the first aspect or the possible designs of the first aspect.

For example, the apparatus may include:

a transceiver module, configured to obtain a first original observation and a second original observation, where the first original observation is from a mobile device, and the second original observation is from a reference station; and a processing module, configured to determine an ionospheric error of a virtual reference station based on the first original observation and the second original observation, and determine assisted positioning information based on the ionospheric error.

The transceiver module is further configured to send the assisted positioning information to a to-be-positioned device.

In a possible design, the processing module is configured to construct an ionospheric error model based on the second original observation and a location of the reference station; and determine the ionospheric error of the virtual reference station based on the first original observation and the ionospheric error model; or construct an ionospheric error model based on the first original observation, the second original observation, and a location of the reference station; and determine the ionospheric error of the virtual reference station based on the ionospheric error model.

In a possible design, the ionospheric error model is further constructed based on ephemeris information that is from the reference station.

In a possible design, the first original observation includes an original observation of a dual-band GNSS signal and an original observation of a tri-band GNSS signal. The processing module is configured to: if a time of the original observation of the tri-band GNSS signal is within a preset time range, determine the ionospheric error of the virtual reference station based on the original observation of the tri-band GNSS signal and the second original observation; or, if a time of the original observation of the tri-band GNSS signal is not within a preset time range, and a time of the original observation of the dual-band GNSS signal is within the preset time range, determine the ionospheric error of the virtual reference station based on the original observation of the dual-band GNSS signal and the second original observation.

In a possible design, the transceiver module is further configured to obtain location information of the mobile device; and the processing module is further configured to determine, based on the location information of the mobile device, that a distance between the virtual reference station and the mobile device is less than a preset distance.

According to a fourth aspect, a positioning apparatus is provided, where the apparatus includes a module/unit/technical means for implementing the method according to any one of the second aspect or the possible designs of the second aspect.

For example, the apparatus may include:

a transceiver module, configured to receive a satellite signal, and determine a first original observation based on the satellite signal.

The transceiver module is further configured to send the first original observation to a network device, where the first original observation is used to determine an ionospheric error of a virtual reference station.

In a possible design, the transceiver module is further configured to receive assisted positioning information from the network device. The apparatus further includes a processing module, configured to perform positioning on a mobile device based on the assisted positioning information.

According to a fifth aspect, a positioning apparatus is provided, including at least one processor and an interface circuit. The interface circuit is configured to receive a signal from another apparatus than the apparatus and transmit the signal to the processor, or send a signal from the processor to another apparatus than the apparatus. The processor is configured to implement the method according to any one of the first aspect or the possible designs of the first aspect or the second aspect or the possible designs of the second aspect by using a logic circuit or executing code instructions.

According to a sixth aspect, a computer-readable storage medium is provided. The readable storage medium is configured to store instructions, and when the instructions are executed, the method according to any one of the first aspect or the possible designs of the first aspect or any one of the second aspect or the possible designs of the second aspect is implemented.

According to a seventh aspect, a computer program product is provided. The computer program product stores instructions. When the instructions are run on a computer, the computer is enabled to perform the method according to any one of the first aspect or the possible designs of the first aspect or any one of the second aspect or the possible designs of the second aspect.

According to an eighth aspect, a positioning system is provided, including: a mobile device, configured to send a first original observation to a network device; a reference station, configured to send a second original observation to the network device; and the network device, configured to determine an ionospheric error of a virtual reference station based on the first original observation and the second original observation, determine assisted positioning information based on the ionospheric error, and send assisted positioning information to a to-be-positioned device.

For beneficial effects of the second aspect to the eighth aspect, refer to technical effects that can be achieved by corresponding designs in the first aspect. Details are not described herein again.

**BRIEF DESCRIPTION OF DRAWINGS**

FIG. 1 is a schematic diagram of a positioning scenario according to an embodiment of this application;
FIG. 2 is a schematic diagram of network RTK;
FIG. 3A and FIG. 3B are schematic diagrams of two positioning systems according to embodiments of this application;
FIG. 4 is a schematic diagram of a positioning method according to an embodiment of this application;
FIG. 5A and FIG. 5B are two possible schematic diagrams of reporting an original observation by a mobile device;
FIG. 6A and FIG. 6B are two schematic diagrams of determining an ionospheric error of a virtual reference station;
FIG. 7 is a schematic diagram of positioning calculation performed by a vehicle;
FIG. 8 is a schematic diagram of a structure of a positioning apparatus according to an embodiment of this application; and
FIG. 9 is a schematic diagram of a structure of another positioning apparatus according to an embodiment of this application.

**DESCRIPTION OF EMBODIMENTS**

The technical solutions provided in embodiments of this application may be applied to any scenario in which positioning is performed based on a satellite signal.

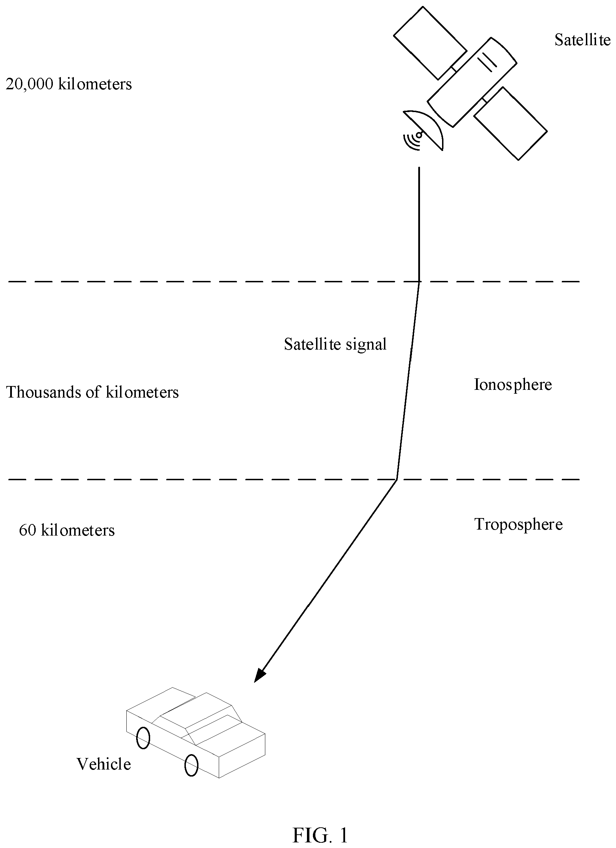

For example, FIG. 1 is a schematic diagram of a positioning scenario according to an embodiment of this application. The scenario may be specifically a scenario of automated driving (Automated Driving, AD), assisted driving, or manual driving. In this scenario, a vehicle may receive a satellite signal from a satellite, and perform positioning based on the satellite signal.

It should be noted that the scenario shown in FIG. 1 is merely an example. In addition to the vehicle, the technical solutions provided in embodiments of this application may be further applied to any another terminal device having a satellite positioning capability. For example, the terminal device may be a smart device having a satellite positioning capability, including but not limited to, a smart home device, such as a television, a robot vacuum cleaner, or a video surveillance device; a smart transportation device, such as a vehicle, a ship, an uncrewed aerial vehicle, a train, a truck, or a truck; and a smart manufacturing device, such as a robot, an industrial device, smart logistics, or a smart factory. Alternatively, the terminal device may be a portable electronic device with a satellite positioning capability, for example, a mobile phone, a tablet computer, a palmtop computer, a headset, an acoustic device, a wearable device (such as a smartwatch), an in-vehicle device, a virtual reality device, or an augmented reality device.

It may be understood that the satellite runs at a height of about 20,000 kilometers away from the ground. In a process of transmitting a satellite signal from the satellite to the ground, the satellite signal needs to pass through the ionosphere (thousands of kilometers away from the ground), the troposphere (60 kilometers away from the ground), and the like in sequence. When the satellite signal passes through the ionosphere, the ionosphere interferes with the propagation of the satellite signal, and there is an ionospheric error in the satellite signal arriving at the ground. The ionospheric error may be represented by using an ionospheric total electron content (ionospheric total electron content, TEC). Certainly, in actual application, the ionospheric error may alternatively be represented by another value. This is not limited in this application.

The ionospheric interference is related to a satellite signal frequency. An ionospheric error model can be constructed based on a dual-band signal (such as L1 and L2, or L1 and L5), so as to eliminate this interference to the greatest extent, which significantly improves positioning accuracy. When the ionosphere is very active due to the impact of the sun, the ionospheric error model constructed based on the dual-band signal cannot eliminate a high-order residual, and consequently a relatively large positioning error is caused. In this case, a more complex model may be constructed by using a tri-band signal (such as L1, L2, and L5) to eliminate high-order impact.

For example, the following provides a method for calculating a dual-band ionospheric error TEC.

It is assumed that pseudoranges of a dual-band signal are p1 and p2, and receive frequencies of a receiver (or transmit frequencies of the satellite) are f1 and f2. Therefore,

$$\text{TEC} = \frac{f_1^2 f_2^2}{40.28\left(f_2^2 - f_1^2\right)}\left(\rho_2^2 - \rho_1^2\right).$$

For example, the following provides a method for calculating a tri-band ionospheric error TEC.

Every two signal carrier phases in the tri-band signal are differentiated to obtain three differential phases: $\Delta P_{12}$, $\Delta P_{13}$, and $\Delta P_{23}$. A fundamental frequency of the transmit frequencies of the satellite is $f_0$, and the speed of light is c. Therefore,

$$\Delta P_{12} = \frac{40.3(n_2^2 - n_1^2)}{cf_0 n_1^2 n_2^2} \text{TEC};$$

$$\Delta P_{13} = \frac{40.3(n_2^4 - n_1^4)}{cf_0 n_1^2 n_2^4} \text{TEC};$$

and

$$\Delta P_{23} = \frac{40.3(n_2^2 - n_1^2)}{cf_0 n_1 n_2^3} \text{TEC}.$$

The following is derived:

$$\text{TEC} = \frac{n_1^2 n_2^4 cf_0}{40.3(n_2^2 - n_1^2)} [(-7\Delta\varphi_{13} + 8\Delta\varphi_{12})_{\text{mode1}} + k],$$

where

$$n_1 = 3, \ n_2 = 8, \ f_0 = 16.668 \, \text{MHz},$$

and mode1 is a modulo operation on 1, which are substituted into the preceding formula, and then the following is obtained,

$$\text{TEC} = 8.3165 \times 10^{16} [(-7\Delta\varphi_{13} + 8\Delta\varphi_{12})_{\text{mode1}} + k],$$

where
K is a tri-band phase integration constant, and $\Delta\varphi_{13}$ and $\Delta\varphi_{12}$ are relative values of differential Doppler phase data, and are provided by the receiver.

Based on the above two examples, information such as the pseudorange, the carrier phase, and the receive frequency are of great value for ionospheric error estimation. Therefore, in actual application, the information such as the pseudorange, the carrier phase, and the receive frequency may be used as assisted positioning information for positioning calculation.

In order to eliminate the ionospheric error, network RTK, also called reference station RTK, is introduced. Network RTK is a new technology based on conventional RTK and a global navigation satellite system (Global Navigation Satellite System, GNSS). Generally, network RTK, also known as multi-reference station RTK, is a positioning method in which a plurality of (generally three or more) reference stations are established in an area to form a mesh coverage, and assisted positioning information (information such as a pseudorange, a carrier phase, and a receive frequency) is calculated and broadcast based on one or more of these reference stations, so as to make real-time corrections to positioning information of users in this area.

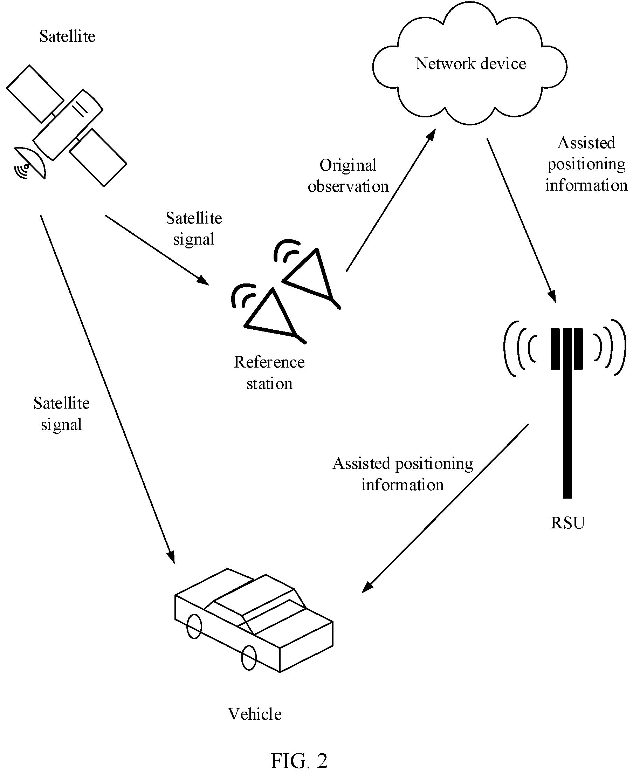

As shown in FIG. 2, FIG. 2 is a schematic diagram of network RTK. A network device (for example, a cloud service platform of a positioning service provider, or referred to as a data processing center) may obtain original observations of one or more reference stations, then determine an ionospheric error based on the original observations, determine assisted positioning information based on the ionospheric error, and then deliver the assisted positioning information to a to-be-positioned device (such as a vehicle) by using a road side unit (road side unit, RSU) for use. When performing highly accurate positioning, the vehicle may calculate location information of the vehicle by using an algorithm such as a real time kinematic (Real Time Kinematic, RTK) algorithm or a dead reckoning (Dead reckoning, DR) algorithm based on the assisted positioning information, and an original observation and a navigation message that are obtained by the vehicle by using a GNSS module, and the like.

However, in actual application, there is a distance requirement on a reference station with assisted positioning information usable by a vehicle (for example, a distance between the reference station and the vehicle is required to be less than 10 km). This imposes an extremely high requirement on a quantity of reference stations to be constructed, and this requirement cannot be implemented in many areas. In addition, an actual location of the reference station is confidential information, and a service provider cannot send the actual location of the reference station to a to-be-positioned device.

To address these problems, a virtual reference station (virtual reference stations, VRS) technology is introduced. The VRS technology is a type of network RTK. A basic principle of the VRS technology is as follows: A specific quantity of reference stations are set up in a specific area, the reference stations receive satellite signals and transmit obtained original observations to a network device, and the network device "virtually" creates a reference station, namely, a virtual reference station near these reference stations based on several reference stations (for example, three adjacent reference stations). Similar to the reference stations, the virtual reference station has specific location information and a corresponding original observation. A difference lies in that a location of the virtual reference station is determined based on locations of the reference stations, and the original observation of the virtual reference station is obtained through simulation calculation based on the original observations of the reference stations. Similar to the original observations of the reference stations, the original observation of the virtual reference station may be used as assisted positioning information and broadcast to the to-be-positioned device.

It may be understood that when calculating the original observation of the virtual reference station, the network device also needs to consider impact of an ionospheric error on the original observation of the virtual reference station. Therefore, an ionospheric error of the virtual reference station needs to be estimated.

In the foregoing VRS technology, an ionospheric error of the virtual reference station is estimated mainly based on the original observations of the reference stations, and there is a problem of poor stability of ionospheric error estimation. The reasons are as follows: 1. Data construction of the virtual reference station is relatively complex, and accurate estimation cannot be implemented without actual observation data. In actual application, a small quantity of actually deployed reference stations causes a small quantity of actual observation data, and consequently, ionospheric error estimation accuracy is poor. 2. The data dynamic performance of the reference stations is poor. When the ionosphere is very active due to the solar influence, accuracy of the ionospheric error obtained by using the virtual reference station is further reduced.

To resolve the foregoing technical solutions, the technical solutions in embodiments of this application are provided.

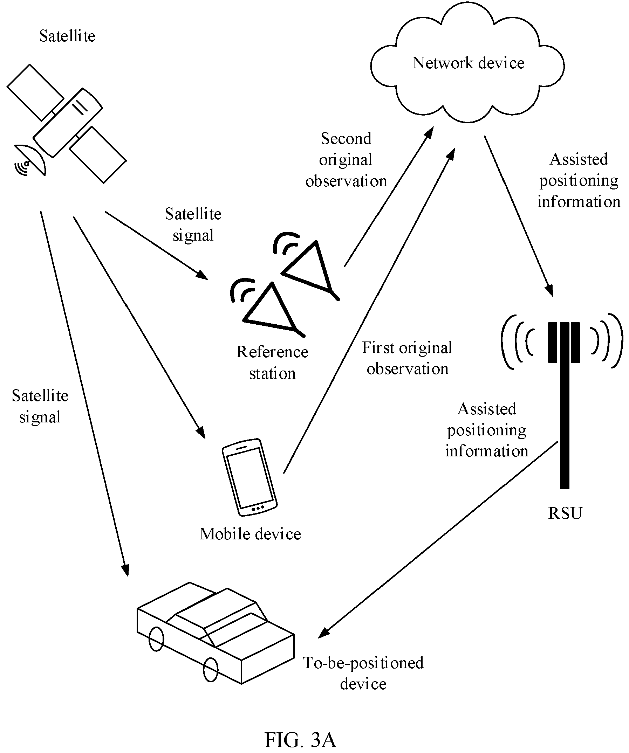

As shown in FIG. 3A, FIG. 3A is a schematic diagram of a positioning system according to an embodiment of this application. The system includes a satellite, a reference station, a network device, an RSU, a mobile device, and a to-be-positioned device.

For example, the satellite includes but is not limited to a GPS satellite or a BeiDou satellite, and may send a GNSS satellite signal.

The mobile device may receive a satellite signal, and obtain a corresponding original observation, for example, a first original observation in the following description; and may further provide the first original observation obtained by the mobile device for the network device. There may be one or more mobile devices. This is not limited in this application.

The reference station may receive a satellite signal, and obtain a corresponding original observation, for example, a second original observation in the following description, and may further provide the second original observation obtained by the reference station for the network device. There may be one or more reference stations. This is not limited in this application.

The to-be-positioned device may receive a satellite signal, and obtain a corresponding original observation, for example, a third original observation (it may be understood that when the mobile device is the to-be-positioned device, the third original observation is also referred to as the first original observation). The to-be-positioned device may perform positioning calculation based on the original observation obtained by the to-be-positioned device and the assisted positioning information delivered by the network device.

It may be understood that the original observation in this specification may also be referred to as original observation data. The original observation is observation data obtained by a receiver (for example, a reference station or a mobile device) by observing some satellites in a global navigation satellite system (for example, a GPS), and may be specifically obtained by processing a satellite signal by a GNSS chip (or a GNSS board card) of the receiver.

In this specification, data types of the original observation include but are not limited to a pseudorange, a carrier phase, a receive frequency, and the like.

The pseudorange is an approximate distance between the receiver and the satellite. A pseudorange of the reference station is used as an example. It is assumed that a clock of the reference station is strictly synchronized with a clock of the satellite. A propagation time period of a satellite signal may be obtained based on a time point when the satellite transmits the satellite signal and a time point when the reference station receives the satellite signal, and a distance between the satellite and the reference station may be obtained by multiplying the propagation time period by the propagation speed. However, a clock difference inevitably exists between the clock of the reference station and the clock of the satellite, and the satellite signal is affected by factors such as atmospheric refraction during transmission. Therefore, the distance measured directly by using this method is not equal to a true distance between the satellite and the reference station. Therefore, this distance is called a pseudorange.

The carrier phase is a phase difference between a satellite signal received by the receiver from a satellite and a local oscillator reference signal of the receiver.

The receive frequency is a frequency at which the receiver receives a satellite signal. For example, the satellite signal transmitted by the satellite may include three carrier frequency bands, which are an L1 carrier frequency band, an L2 carrier frequency band, and an L5 carrier frequency band. A frequency f1 of the L1 carrier frequency band is 1575.42 MHz, a frequency f2 of the L2 carrier frequency band is 1227.6 MHz, and a frequency f5 of the L5 carrier frequency band is 1176.45 MHz. It may be understood that from a perspective of a satellite, the receive frequency may be replaced with a transmit frequency.

It should be noted that data types of original observations obtained by different devices may be the same or may be different. This is not limited in this application. In addition, for a same data type, specific observation values obtained by different devices may be the same or may be different. The specific observation values depend on a location of a device and a processing capability of a GNSS chip of the device. For example, a value of a pseudorange in the first original observation may be different from a value of a pseudorange in the second original observation.

The network device may be a data processing center of network RTK, and is specifically, for example, a cloud service platform of a positioning service provider. The network device may construct and determine, based on original observations provided by a reference station, a mobile device, and the like, assisted positioning information of at least one virtual reference station, and send the assisted positioning information of the at least one virtual reference station to the to-be-positioned device by using the RSU. A specific solution in which the network device constructs the virtual reference station and determines the assisted positioning information of the virtual reference station is described in detail in the following description.

The RSU may be any device that can communicate with the to-be-positioned device and the network device, and may be, for example, a base station or user equipment. This is not specifically limited in embodiments of this application. The RSU may receive the assisted positioning information delivered by the network device, and forward the assisted positioning information to the to-be-positioned device. In addition, the RSU may alternatively be used as a relay station for sending a signal by another device. For example, the reference station may send the second original observation to the network device by using the RSU. This is not limited in this application.

In a possible design, the to-be-positioned device may be a mobile device. In other words, the to-be-positioned device may provide, for the network device for use, an original observation obtained by the to-be-positioned device.

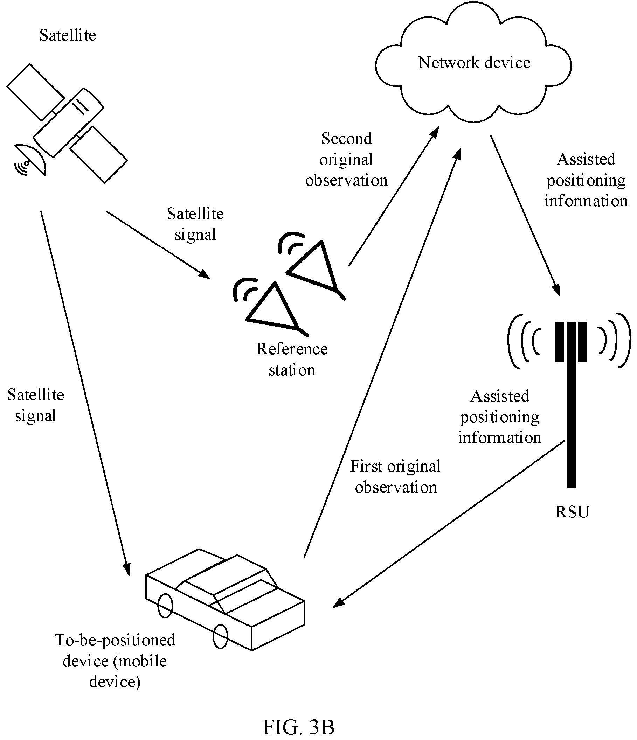

For example, as shown in FIG. 3B, FIG. 3B is a schematic diagram of another positioning system according to an embodiment of this application. In the system, a to-be-positioned device (a mobile device) may provide, for a network device, a first original observation obtained by the to-be-positioned device (the mobile device).

It may be understood that in actual application, when the mobile device and the to-be-positioned device are different devices, in the mobile device and the to-be-positioned device, it is possible that the mobile device or the to-be-positioned device provides an original observation for the network device, or it is possible that both the mobile device and the to-be-positioned device provide original observations for the network device. This is not limited in this application.

It may be understood that the devices shown in FIG. 3A and FIG. 3B are merely examples. In actual application, the system may further include another device, for example, may further include a network device configured to provide an application such as a navigation map.

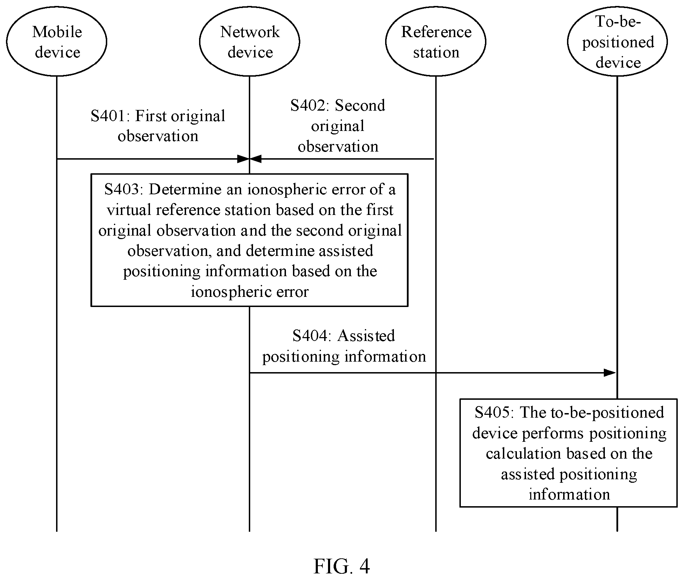

FIG. 4 is a schematic diagram of a positioning method according to an embodiment of this application. The method may be applied to the system shown in FIG. 3A or FIG. 3B. The method includes the following steps.

S401: A mobile device sends a first original observation. Correspondingly, a network device receives the first original observation.

Specifically, the mobile device may receive a satellite signal, and obtain the first original observation based on the satellite signal.

The mobile device may be any mobile device having a satellite positioning capability, for example, including but not limited to, a smart home device, such as a television, a robot vacuum cleaner, or a video surveillance device; a smart transportation device, such as a vehicle, a ship, an uncrewed aerial vehicle, a train, a truck, or a truck; and a smart manufacturing device, such as a robot, an industrial device, smart logistics, or a smart factory. Alternatively, the terminal device may be a portable electronic device with a satellite positioning capability, for example, a mobile phone, a tablet computer, a palmtop computer, a headset, an acoustic device, a wearable device (such as a smartwatch), an in-vehicle device, a virtual reality device, or an augmented reality device.

In a possible design, the mobile device is a to-be-positioned device, where a scenario is, for example, shown in FIG. 3B. Optionally, the mobile device (namely, the to-be-positioned device) may send the first original observation to the network device when needing to perform positioning calculation. This can ensure that the first original observation at the network device has good real-time performance, and avoid a problem that power consumption is wasted due to frequent transmission of original observations by the mobile device.

In a possible design, the mobile device is different from the to-be-positioned device, where a scenario is, for example, shown in FIG. 3A. In this scenario, there may be one or more mobile devices. Optionally, each mobile device may periodically send a first original observation to the network device at a specified time interval, to ensure that the first original observation at the network device has good real-time performance. This contributes to improving accuracy of subsequent ionospheric error estimation.

Certainly, when the mobile device is different from the to-be-positioned device, the to-be-positioned device may also send an original observation to the network device. This is not limited in this application.

In this embodiment of this application, data types of the first original observation include but are not limited to one or more of a first pseudorange, a first carrier phase, and a first receive frequency. This is not limited in this application.

In a possible design, the mobile device (or the to-be-positioned device) further receives first indication information. If the indication information indicates a user (for example, a vehicle owner) of the mobile device (or the to-be-positioned device) to provide the first original observation for the network device for use, the mobile device sends the first original observation to the network device. If the first indication information indicates that a user does not agree to provide the first original observation for the network device for use, the mobile device does not send the first original observation.

In this way, privacy of user data can be improved, and user experience can be improved.

In another possible design, before the mobile device (or the to-be-positioned device) sends the first original observation to the network device, if the mobile device receives second indication information, the mobile device determines that a user agrees to provide the first original observation for the network device for use, and sends the first original observation to the network device; or if the mobile device does not receive second indication information, the mobile device determines that a user does not agree to provide the first original observation for the network device for use, and does not send the first original observation.

In this way, privacy of user data can be ensured, and user experience can be improved.

S402: A reference station sends a second original observation. Correspondingly, the network device receives the second original observation.

Specifically, the reference station may receive a satellite signal, and obtain the second original observation after processing the satellite signal. Data types of the second original observation include but are not limited to one or more of a second pseudorange, a second carrier phase, and a second receive frequency. This is not limited in this application.

It should be understood that the data types of the first original observation and the data types of the second original observation may be the same (for example, the first original observation includes the first pseudorange, the first carrier phase, and the first receive frequency, and the second original observation includes the second pseudorange, the second carrier phase, and the second receive frequency), or may be different (for example, the first original observation includes the first carrier phase and the first receive frequency, and the second original observation includes the second carrier phase and the second receive frequency). This is not limited in this application.

In a possible design, each reference station may periodically send the second original observation to the network device at a specified time interval. This can ensure that the second original observation at the network device has good real-time performance, and contributes to improving accuracy of subsequent ionospheric error estimation.

In this embodiment of this application, the network device knows accurate location information (for example, at an accuracy level of centimeters) of each reference station, or each reference station may report accurate location information of the reference station when reporting an original observation of the reference station to the network device.

It should be noted that, in this embodiment of this application, step S401 and step S402 may be performed in a random order.

S403: The network device determines an ionospheric error of a virtual reference station based on the first original observation and the second original observation, and determines assisted positioning information based on the ionospheric error.

In this embodiment of this application, a distance between the virtual reference station and the mobile device is less than a preset distance. The preset distance may be set to a maximum distance of a converged solution obtained based on an RTK algorithm, for example, may be 10 km. This is specifically limited in this application.

In this embodiment of this application, a specific location of the virtual reference station may be determined based on a location of the reference station. For example, in specific application, a plurality of reference stations are constructed in one area, and one virtual reference station may be constructed for every several (for example, three) adjacent reference stations. For example, in an RTK network, every three adjacent reference stations may form an RTK grid, and a virtual reference station may be constructed at any location in the grid based on data of the reference stations in each RTK grid. For example, a specific construction method is: determining a location of a virtual reference station in each RTK grid based on locations of reference stations in the RTK grid, and calculating, through simulation, an original observation of the virtual reference station in each RTK grid based on original observations of the reference stations in the RTK grid.

Therefore, the network device may select, based on location information of the mobile device, at least three reference stations in a preset range near the mobile device, and then determine, based on locations of the at least three reference stations, a location of a virtual reference station (namely, the virtual reference station in S403) that is used by the to-be-positioned device.

In specific implementation, when sending the first original observation to the network device, the mobile device may report the location information of the mobile device to the network device. For example, when the mobile device is different from the to-be-positioned device, the mobile device may periodically report the location information and the first original observation of the mobile device to the network device at a specified time interval. For example, when the mobile device is the to-be-positioned device, and when needing to perform positioning, the to-be-positioned device reports the location information and the first original observation of the to-be-positioned device to the network device. This can ensure that the location information and the first original observation that are of the mobile device and are obtained by the network device have good real-time performance, and contributes to improving accuracy of subsequent ionospheric error estimation.

It should be noted that the location information of the mobile device herein may be approximate or rough location information. For example, the location information of the mobile device is at an accuracy level of meters. In this way, the network device may determine the location of the virtual reference station based on the location information of the mobile device. Optionally, the mobile device may determine the approximate location information of the mobile device in a single-point positioning manner or in another manner. It may be understood that, even if the location information is approximate or rough location information, the location information is still referred to as "location information of the mobile device" in this specification for ease of description.

In actual application, the network device may receive location information and original observations reported by a plurality of mobile devices. Each mobile device may periodically report the location information and the original observation at a specified time interval. The network device may determine, based on the location information of each mobile device, location information of the mobile device and a distance from the virtual reference station, and discard an original observation of a mobile device whose distance from the virtual reference station is not less than the preset distance, only an original observation of a mobile device whose distance from the virtual reference station is within a preset distance range is used.

This contributes to improving accuracy of ionospheric error estimation.

In this embodiment of this application, when the to-be-positioned device is the mobile device, the network device determines the ionospheric error of the virtual reference station by using the original observation reported by the to-be-positioned device and the second original observation.

When the to-be-positioned device is different from the mobile device, in one case, the network device receives only the original observation reported by the mobile device; therefore, the network device determines the ionospheric error of the virtual reference station by using the original observation reported by the mobile device and the second original observation. In other words, the first original observation is reported by the mobile device. In another case, the network device receives only the original observation reported by the to-be-positioned device; therefore, the network device determines the ionospheric error of the virtual reference station by using the original observation reported by the to-be-positioned device and the second original observation. In other words, the first original observation is reported by the to-be-positioned device. In still another case, the network device receives both the original observation reported by the to-be-positioned device and the original observation reported by the mobile device; therefore, the network device may select an original observation reported by one of the devices to determine the ionospheric error of the virtual reference station. In other words, the first original observation is selected by the network device from the original observation reported by the to-be-positioned device and the original observation reported by the mobile device.

Optionally, when the network device receives the original observation reported by the to-be-positioned device and the original observation reported by the mobile device, the network device selects the original observation reported by the to-be-positioned device to determine the ionospheric error of the virtual reference station. This can further improve accuracy of ionospheric error estimation.

Further, in actual application, a GNSS chip is disposed in the mobile device, to process a satellite signal into an original observation. There are a plurality of types of GNSS chips such as a single-band GNSS chip, a dual-band GNSS chip, and a tri-band GNSS chip. An original observation of a GNSS signal including at least two frequency bands is generally used for ionospheric error estimation. Therefore, in this embodiment of this application, the first original observation received by the network device may include an original observation of a dual-band GNSS signal and/or an original observation of a tri-band GNSS signal.

In a possible design, if the network device obtains only the original observation of the dual-band GNSS signal, the original observation of the dual-band GNSS signal is used to determine the ionospheric error of the virtual reference station. If the network device can obtain the original observation of the dual-band GNSS signal and the tri-band GNSS signal, the original observation of the tri-band GNSS signal may be preferentially used to determine the ionospheric error of the virtual reference station. For example, if a time of the original observation of the tri-band GNSS signal is within a preset time range, the network device determines the ionospheric error of the virtual reference station based on the original observation of the tri-band GNSS signal and the second original observation. Alternatively, if a time of the original observation of the tri-band GNSS signal is not within a preset time range, and a time of the original observation of the dual-band GNSS signal is within the preset time range, the network device determines the ionospheric error of the virtual reference station based on the original observation of the dual-band GNSS signal and the second original observation.

The preset time range may be set depending on a requirement. This is not limited in this application.

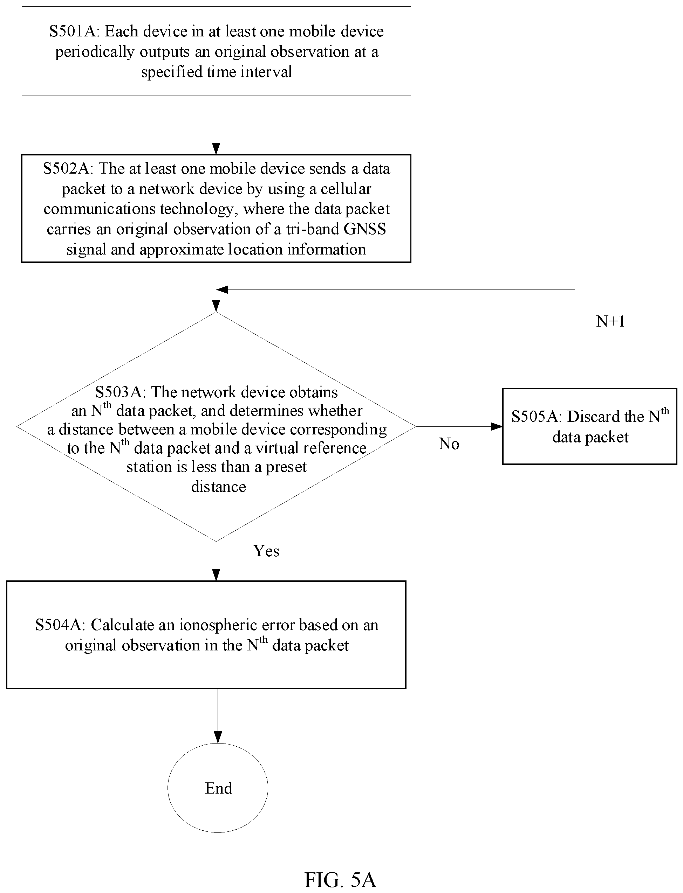

As shown in FIG. 5A, an example in which a mobile device (a tri-band mobile device for short) supporting a tri-band GNSS chip can report an original observation is used.

S501A: Each device in at least one tri-band mobile device periodically outputs an original observation of a tri-band GNSS signal of the device at a specified time interval.

S502A: The at least one mobile device sends a data packet to a network device (for example, by using a cellular communications technology), where the data packet carries the original observation of the tri-band GNSS signal and approximate location information. Correspondingly, the network device receives the data packet sent by the at least one mobile device.

S503A: It is assumed that a latest data packet currently received by the network device is an $N^{th}$ data packet, and the network device determines whether a distance between a tri-band mobile device corresponding to the $N^{th}$ data packet and a virtual reference station is less than a preset distance.

If yes, S504A is performed; otherwise, S505A is performed.

S504A: Calculate an ionospheric error of the virtual reference station based on an original observation in the $N^{th}$ data packet, and end the current ionospheric error calculation procedure after the ionospheric error of the virtual reference station is obtained.

S505A: Discard the original observation in the $N^{th}$ data packet, go back to S503A, to obtain an $(N+1)^{th}$ data packet, repeat S503A and a procedure after S503A, and end the current ionospheric error calculation procedure until the ionospheric error of the virtual reference station is obtained.

It may be understood that S501A and S502A may be periodically and repeatedly performed at a specified time interval. S503A and subsequent steps (S504A or S505A) may be performed by the network device only when the network device needs to calculate the ionospheric error of the virtual reference station.

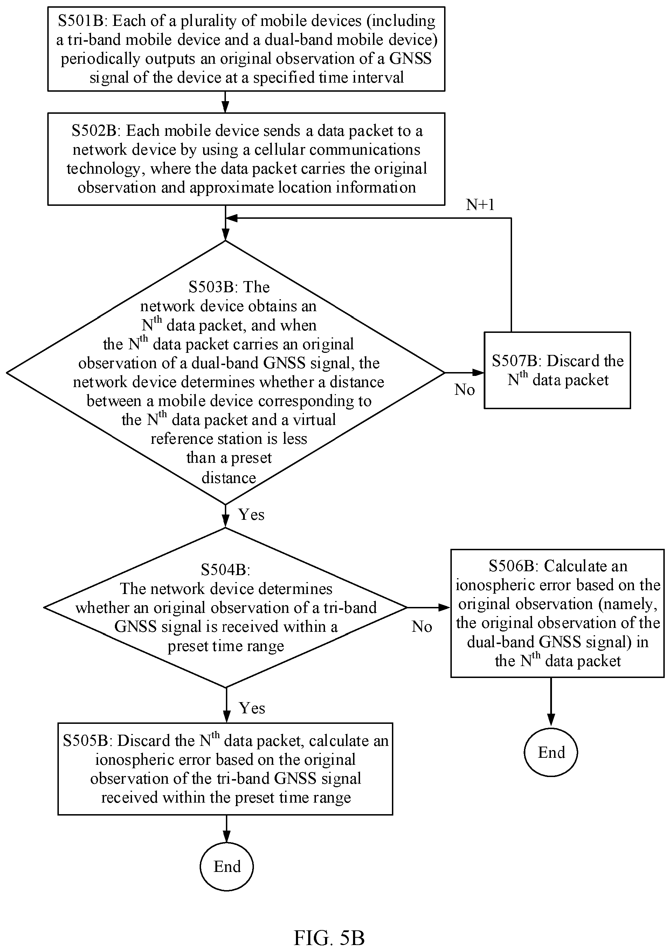

As shown in FIG. 5B, an example in which both a mobile device supporting a dual-band GNSS chip and a mobile device supporting a tri-band GNSS chip can report an original observation is used.

S501B: Each of a plurality of mobile devices (including a tri-band mobile device and a dual-band mobile device) periodically outputs an original observation of a GNSS signal of the device at a specified time interval.

S502B: Each mobile device sends a data packet to a network device (for example, by using a cellular communications technology), where the data packet carries the original observation and approximate location information. Correspondingly, the network device receives the data packet.

S503B: It is assumed that the network device currently receives an $N^{th}$ data packet, and it is assumed that the $N^{th}$ data packet carries an original observation of a dual-band GNSS signal. The network device determines whether a distance between a mobile device corresponding to the $N^{th}$ data packet and a virtual reference station is less than a preset distance. If yes, S504B is performed; otherwise, S507B is performed.

S504B: Determine whether an original observation of a tri-band GNSS signal is received within a preset time range. If yes, perform S505B; otherwise, perform S506B.

S505B: Discard the $N^{th}$ data packet, calculate an ionospheric error of the virtual reference station based on the original observation of the tri-band GNSS signal received within the preset time range, and end the current ionospheric error calculation procedure until the ionospheric error of the virtual reference station is obtained.

S506B: Calculate an ionospheric error based on the original observation (namely, the original observation of the dual-band GNSS signal) in the $N^{th}$ data packet, and end the current ionospheric error calculation procedure after the ionospheric error of the virtual reference station is obtained.

S507B: Discard the $N^{th}$ data packet, go back to S503B, to obtain an $(N+1)^{th}$ data packet, repeat S503B and a procedure after S503B, and end the current ionospheric error calculation procedure after the ionospheric error of the virtual reference station is obtained.

It may be understood that S501B and S502B may be periodically and repeatedly performed at a specified time interval. S503B and subsequent steps may be performed by the network device only when the network device needs to calculate the ionospheric error of the virtual reference station.

This contributes to further improving accuracy of ionospheric error estimation.

In a possible design, the mobile device further receives third indication information. If the third indication information indicates that a user (for example, a vehicle owner) of the mobile device agrees to provide location information of the mobile device for the network device for use, the mobile device reports the location information of the mobile device. If the third indication information indicates that a user (for example, a vehicle owner) of the mobile device does not agree to provide location information of the mobile device for the network device for use, the mobile device does not report the location information of the mobile device.

In another possible design, if the mobile device receives fourth indication information, the mobile device determines that a user (for example, a vehicle owner) of the mobile device agrees to provide location information of the mobile device for the network device for use, and the mobile device reports the location information of the mobile device. If the mobile device does not receive fourth indication information, the mobile device determines that a user (for example, a vehicle owner) of the mobile device does not agree to provide location information of the mobile device for the network device for use, and the mobile device does not report the location information of the mobile device.

In this way, privacy of user data can be improved, and user experience can be improved.

In a possible design, the determining, by the network device, the ionospheric error of the virtual reference station based on the first original observation and the second original observation may be implemented by constructing an ionospheric error model.

The ionospheric error model includes location information of a plurality of location points in a specific area and an ionospheric error of each of the plurality of location points. The network device may determine an ionospheric error at any location point in the area based on the model.

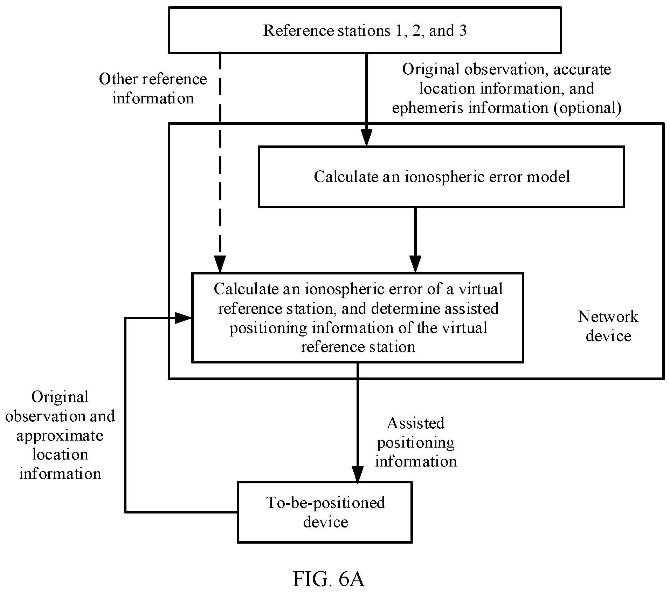

In a specific example, the first original observation is used by the network device to construct the ionospheric error of the virtual reference station. As shown in FIG. 6A, an example in which the to-be-positioned device is a mobile device is used. The network device first constructs an ionospheric error model based on original observations (namely, second original observations) of at least three reference stations (reference stations 1, 2, and 3 in FIG. 6A are used as an example, and are not actually limited thereto) and location information of the at least three reference stations. Location information is input to the ionospheric error model, and an ionospheric error at a corresponding location is output. After receiving an original observation of the to-be-positioned device and location information (for example, the location information at the meter-level accuracy) of the to-be-positioned device, the network device may correct the ionospheric error model based on the original observation of the to-be-positioned device, and determine the ionospheric error of the virtual reference station based on the corrected ionospheric error model and the location information of the to-be-positioned device, or the network device directly constructs the ionospheric error of the virtual reference station directly based on the original observation of the to-be-positioned device.

It may be understood that accuracy of the location information of the reference station is higher than that of the location information of the to-be-positioned device. For example, the location information of the to-be-positioned device is at an accuracy level of meters, and the location information of the reference station is at an accuracy level of centimeters.

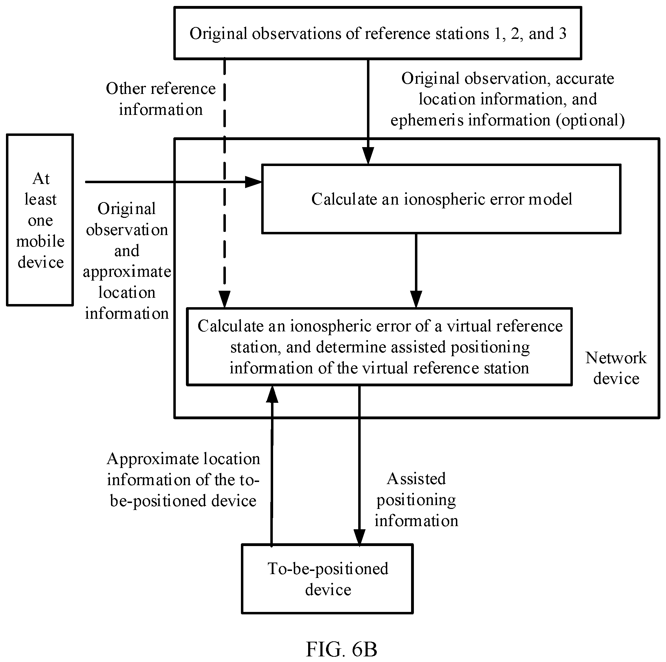

In another specific example, the first original observation is used by the network device to construct an ionospheric error model. As shown in FIG. 6B, an example in which the to-be-positioned device is a mobile device is used. The network device first constructs an ionospheric error model based on original observations (namely, second original observations) of at least three reference stations (reference stations 1, 2, and 3 are used as an example in FIG. 6B, and are not actually limited thereto), accurate location information of the at least three reference stations, an original observation (namely, the first original observation) of at least one mobile device, and location information (for example, location information at meter-level accuracy) of the at least one mobile device. Location information is input to the ionospheric error model, and an ionospheric error at a corresponding location is output. Then, the ionospheric error of the virtual reference station is determined based on the ionospheric error model and the location information of the to-be-positioned device.

In a possible design, in addition to the first original observation and the second original observation, the network device may further determine the ionospheric error of the virtual reference station in combination of ephemeris information, where the ephemeris information may be from the reference station. For example, in the example shown in FIG. 6A or FIG. 6B, the reference station may further provide ephemeris information for the network device, so that the network device constructs the ionospheric error model.

This can further improve accuracy of the ionospheric error of the virtual reference station.

After determining the ionospheric error of the virtual reference station, the network device may determine the assisted positioning information based on the ionospheric error.

In this embodiment of this application, the assisted positioning information may be understood as related information of the virtual reference station, for example, includes but is not limited to an original observation of the virtual reference station. The original observation of the virtual reference station includes a pseudorange of the virtual reference station and/or a carrier phase of the virtual reference station.

Correspondingly, that the network device determines the assisted positioning information based on the ionospheric error may include: The network device corrects the original observation of the virtual reference station based on the ionospheric error, so that the network device delivers the corrected original observation as the assisted positioning information to the to-be-positioned device for use, thereby improving positioning accuracy.

Optionally, in addition to the pseudorange of the virtual reference station and/or the carrier phase of the virtual reference station, the original observation of the virtual reference station may further include other information of the virtual reference station, for example, a receive frequency of the virtual reference station. It may be understood that the receive frequency of the virtual reference station may be obtained based on a receive frequency of the reference station.

Optionally, in addition to the original observation of the virtual reference station, the assisted positioning information may further include other information such as ephemeris information of the virtual reference station and a location of the virtual reference station. Any information about the virtual reference station that can provide an assistance function for positioning of the to-be-positioned device may be included in the assisted positioning information.

Optionally, the reference station may further provide other reference information such as a tropospheric error for the network device, so that the network device may further determine the assisted positioning information based on the information such as the tropospheric error. This contributes to further improving positioning accuracy. In FIG. 6A and FIG. 6B, dashed lines are used to represent that the reference information is optional.

S404: The network device sends the assisted positioning information to the to-be-positioned device. Correspondingly, the to-be-positioned device receives the assisted positioning information from the network device.

For example, as shown in FIG. 3A and FIG. 3B, the assisted positioning information may be transmitted to the to-be-positioned device by using one or more RSUs.

S405: The to-be-positioned device performs positioning calculation based on the assisted positioning information.

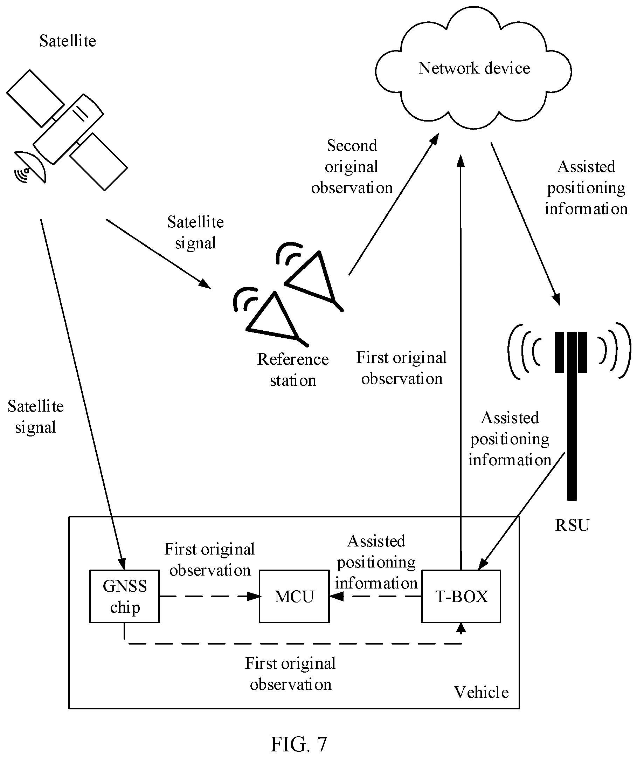

For example, as shown in FIG. 7, an example in which the to-be-positioned device is a mobile device and the to-be-positioned device is specifically a vehicle is used. The vehicle includes a GNSS chip, a micro control unit (micro control unit, MCU), and an in-vehicle communications terminal (telematics box, T-BOX). The vehicle may receive a satellite signal by using the GNSS chip, and process the satellite signal, to obtain a first original observation. The vehicle may send the first original observation by using the T-BOX, for example, upload the first original observation to the network device. The vehicle may further receive, by using the T-BOX, assisted positioning information delivered by the network device (namely, the assisted positioning information of the virtual reference station delivered in step S404). The MCU of the vehicle may perform RTK calculation based on the first original observation and the assisted positioning information, to obtain location information of the vehicle in which the ionospheric error is eliminated.

In the foregoing solution, in addition to the reference station, the mobile device may provide an original observation (namely, the first original observation) of the mobile device for the network device for use, so that the network device may determine the ionospheric error of the virtual reference station based on an original observation of the reference station and the original observation of the mobile device. In this way, more original observations (which are all actual observation data) are used by the network device to construct the virtual reference station, so that accuracy of ionospheric error estimation can be improved. In addition, because the mobile device has mobility, the original observations used by the network device to construct the virtual reference station also have good dynamic performance, so that accuracy of ionospheric error estimation can be further improved. In addition, the to-be-positioned device itself may be used as a mobile device to report the first original observation, so that accuracy of ionospheric error estimation can be further improved.

The foregoing describes the methods provided in embodiments of this application with reference to the accompanying drawings, and the following describes apparatuses provided in embodiments of this application with reference to the accompanying drawings.

Based on a same technical concept, an embodiment of this application provides a positioning apparatus 800. The positioning apparatus 800 includes a module/unit/means configured to perform the method performed by any device in the foregoing method embodiments. The module/unit/mean may be implemented by software, or may be implemented by hardware, or may be implemented by hardware executing corresponding software.

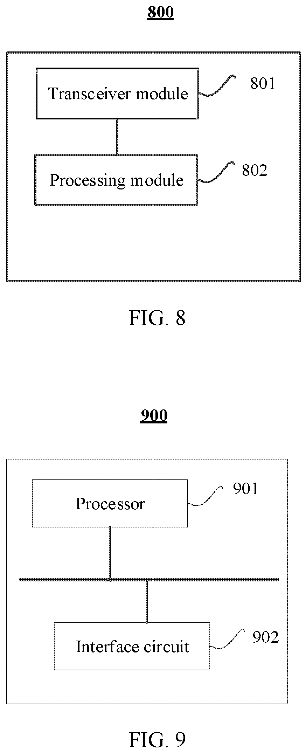

For example, as shown in FIG. 8, the positioning apparatus 800 may include a transceiver module 801 and a processing module 802.

When the positioning apparatus 800 is configured to implement the module/unit/means of the method performed by the network device in the foregoing method embodiments, the transceiver module 801 is configured to obtain a first original observation and a second original observation, where the first original observation is from a mobile device, and the second original observation is from a reference station. The processing module 802 is configured to determine an ionospheric error of a virtual reference station based on the first original observation and the second original observation, and determine assisted positioning information based on the ionospheric error. The transceiver module 801 is further configured to send the assisted positioning information to a to-be-positioned device.

When the positioning apparatus 800 is configured to implement the module/unit/means of the method performed by the mobile device in the foregoing method embodiments, the transceiver module 801 is configured to receive a satellite signal, and determine a first original observation based on the satellite signal. The transceiver module 801 is further configured to send the first original observation to a network device, where the first original observation is used to determine an ionospheric error of a virtual reference station.

It should be understood that all related content of the steps in the foregoing method embodiments may be cited in function descriptions of the corresponding functional modules. Details are not described herein again.

Based on a same technical concept, as shown in FIG. 9, an embodiment of this application further provides a positioning apparatus 900. The apparatus 900 includes at least one processor 901 and an interface circuit 902. The interface circuit 902 is configured to receive a signal from another apparatus than the apparatus 900, and transmit the signal to the processor 901, or send a signal from the processor 901 to another apparatus than the apparatus. The processor 901 is configured to implement, by using a logic circuit or executing code instructions, the method performed by any device in the foregoing method embodiments.

It should be understood that the processor mentioned in embodiments of this application may be implemented by hardware or may be implemented by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a discrete gate or transistor logic device, a discrete hardware component, or the like. The general-purpose processor may be a microprocessor, or the processor may be any conventional processor or the like.

It may be understood that the memory mentioned in embodiments of this application may be a volatile memory or a nonvolatile memory, or may include a volatile memory and a nonvolatile memory. The nonvolatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM) or a flash memory. The volatile memory may be a random access memory (Random Access Memory, RAM), and is used as an external cache. By way of example but not limitation, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate or transistor logic device, or a discrete hardware component, the memory (storage module) may be integrated into the processor.

It should be noted that the memory described in this specification aims to include but is not limited to these memories and any memory of another proper type.

Based on a same technical concept, an embodiment of this application further provides a computer-readable storage medium, including a program or instructions. When the program is or the instructions are run on a computer, the method performed by any device in the foregoing embodiments is performed.

Based on a same technical concept, an embodiment of this application further provides a computer program product including instructions. The computer program product stores the instructions, and when the instructions are run on a computer, the method performed by any device in the foregoing method embodiments is performed.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product implemented on one or more computer-usable storage media (including but not limited to a disk memory, a CD-ROM, an optical memory, and the like) that include computer-usable program code.

This application is described with reference to the flowcharts and/or the block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of the another programmable data processing device generate an apparatus for implementing a specific function in one or more procedures in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, to generate computerimplemented processing. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the claims of this application and their equivalent technologies.

In this application, "at least one" means one or more, and "a plurality of" means two or more. The term "and/or" describes an association relationship for describing associated objects and represents that three relationships may exist. For example, A and/or B may represent the following three cases: Only A exists, both A and B exist, and only B exists. A and B each may be singular or plural. In the text descriptions of this application, the character "/" generally indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

**Claims**

1. A positioning method, comprising:

   obtaining a first original observation and a second original observation, wherein the first original observation is from a mobile device, and the second original observation is from a reference station;

   determining an ionospheric error of a virtual reference station based on the first original observation and the second original observation, and determining assisted positioning information based on the ionospheric error; and

   sending the assisted positioning information to a to-be-positioned device.

2. The method according to claim 1, wherein the determining an ionospheric error of a virtual reference station based on the first original observation and the second original observation comprises:

   constructing an ionospheric error model based on the second original observation and a location of the reference station, and determining the ionospheric error of the virtual reference station based on the first original observation and the ionospheric error model; or

   constructing an ionospheric error model based on the first original observation, the second original observation, and a location of the reference station, and determining the ionospheric error of the virtual reference station based on the ionospheric error model.

3. The method according to claim 2, wherein the ionospheric error model is further constructed based on ephemeris information that is from the reference station.

4. The method according to any one of claims 1 to 3, wherein the first original observation comprises an original observation of a dual-band global navigation satellite system GNSS signal and/or an original observation of a tri-band GNSS signal.

5. The method according to claim 4, wherein the first original observation comprises the original observation of the dual-band GNSS signal and the original observation of the tri-band GNSS signal; and

   the determining an ionospheric error of a virtual reference station based on the first original observation and the second original observation comprises:

   if a time of the original observation of the tri-band GNSS signal is within a preset time range, determining the ionospheric error of the virtual reference station based on the original observation of the tri-band GNSS signal and the second original observation; or

   if a time of the original observation of the tri-band GNSS signal is not within a preset time range, and a time of the original observation of the dual-band GNSS signal is within the preset time range, determining the ionospheric error of the virtual reference station based on the original observation of the dual-band GNSS signal and the second original observation.

6. The method according to any one of claims 1 to 5, wherein the to-be-positioned device is the mobile device.

7. The method according to any one of claims 1 to 6, wherein a distance between the virtual reference station and the mobile device is less than a preset distance.

8. The method according to claim 7, wherein the method further comprises:

obtaining location information of the mobile device; and

determining, based on the location information of the mobile device, that the distance between the virtual reference station and the mobile device is less than the preset distance.

9. The method according to any one of claims 1 to 8, wherein a location of the virtual reference station is determined based on the location of the reference station.

10. The method according to any one of claims 1 to 9, wherein the first original observation comprises one or more of a pseudorange, a carrier phase, and a receive frequency.

11. The method according to any one of claims 1 to 10, wherein the mobile device is one or more of a vehicle, an uncrewed aerial vehicle, a helicopter, an airplane, and a ship.

12. A positioning method, comprising:

receiving a satellite signal, and determining a first original observation based on the satellite signal; and

sending the first original observation to a network device, wherein the first original observation is used to determine an ionospheric error of a virtual reference station.

13. The method according to claim 12, further comprising:

receiving assisted positioning information from the network device, and performing positioning on a mobile device based on the assisted positioning information.

14. The method according to claim 12 or 13, wherein the first original observation comprises one or more of a pseudorange, a carrier phase, and a receive frequency.

15. The method according to any one of claims 1 to 14, wherein the mobile device is one or more of a vehicle, an uncrewed aerial vehicle, a helicopter, an airplane, and a ship.

16. A positioning apparatus, comprising:

a transceiver module, configured to obtain a first original observation and a second original observation, wherein the first original observation is from a mobile device, and the second original observation is from a reference station; and

a processing module, configured to determine an ionospheric error of a virtual reference station based on the first original observation and the second original observation, and determine assisted positioning information based on the ionospheric error, wherein

the transceiver module is further configured to send the assisted positioning information to a to-be-positioned device.

17. The apparatus according to claim 16, wherein the processing module is configured to:

construct an ionospheric error model based on the second original observation and a location of the reference station, and determine the ionospheric error of the virtual reference station based on the first original observation and the ionospheric error model; or

construct an ionospheric error model based on the first original observation, the second original observation, and a location of the reference station, and determine the ionospheric error of the virtual reference station based on the ionospheric error model.

18. The apparatus according to claim 16 or 17, wherein the ionospheric error model is further constructed based on ephemeris information that is from the reference station.

19. The apparatus according to any one of claims 16 to 18, wherein the first original observation comprises an original observation of a dual-band GNSS signal and an original observation of a tri-band GNSS signal, and the processing module is configured to:

if a time of the original observation of the tri-band GNSS signal is within a preset time range, determine the ionospheric error of the virtual reference station based on the original observation of the tri-band GNSS signal and the second original observation; or

if a time of the original observation of the tri-band GNSS signal is not within a preset time range, and a time of the original observation of the dual-band GNSS signal is within the preset time range, determine the ionospheric error of the virtual reference station based on the original observation of the dual-band GNSS signal and the second original observation.

20. The apparatus according to any one of claims 16 to 19, wherein the transceiver module is further configured to obtain location information of the mobile device; and

the processing module is further configured to determine, based on the location information of the mobile device, that a distance between the virtual reference station and the mobile device is less than a preset distance.

21. A positioning apparatus, comprising:

a transceiver module, configured to receive a satellite signal, and determine a first original observation based on the satellite signal, wherein

the transceiver module is further configured to send the first original observation to a network device, wherein the first original observation is used to determine an ionospheric error of a virtual reference station.

22. The apparatus according to claim 21, wherein the transceiver module is further configured to receive assisted positioning information from the network device, wherein

the apparatus further comprises a processing module, configured to perform positioning on a mobile device based on the assisted positioning information.

23. A positioning apparatus, comprising at least one processor and an interface circuit, wherein

the interface circuit is configured to receive a signal from another apparatus than the apparatus, and transmit the signal to the processor, or send a signal from the processor to another apparatus than the apparatus, wherein the processor is configured to implement the method according to any one of claims 1 to 11 or the method according to any one of claims 12 to 15 by using a logic circuit or executing code instructions.

24. A computer-readable storage medium, wherein the readable storage medium is configured to store instructions, and when the instructions are executed, the method according to any one of claims 1 to 11 or the method according to any one of claims 12 to 15 is implemented.

25. A computer program product, wherein the computer program product stores instructions, and when the instructions are run on a computer, the computer is enabled to perform the method according to any one of claims 1 to 11 or the method according to any one of claims 12 to 15.

26. A positioning system, comprising:

a mobile device, configured to send a first original observation to a network device;

a reference station, configured to send a second original observation to the network device; and

the network device, configured to determine an ionospheric error of a virtual reference station based on the first original observation and the second original observation, determine assisted positioning information based on the ionospheric error, and send the assisted positioning information to a to-be-positioned device.

20,000 kilometers

Satellite

Satellite signal

Thousands of kilometers

Ionosphere

60 kilometers

Troposphere

Vehicle

FIG. 1

Satellite

Network device

Original
observation

Assisted
positioning
information

Satellite
signal

Reference
station

Satellite
signal

Assisted positioning
information

RSU

Vehicle

FIG. 2

FIG. 3A

FIG. 3B

```
┌──────────┐      ┌──────────┐      ┌──────────┐      ┌──────────┐
│  Mobile  │      │ Network  │      │Reference │      │  To-be-  │
│  device  │      │  device  │      │ station  │      │positioned│
│          │      │          │      │          │      │  device  │
└────┬─────┘      └────┬─────┘      └────┬─────┘      └────┬─────┘
     │       S401: First original        │                 │
     │         observation    S402: Second│                 │
     │                          original  │                 │
     │                        observation │                 │
     ├────────────────────►◄──────────────┤                 │
     │   ┌──────────────────────────────┐ │                 │
     │   │ S403: Determine an ionospheric│                 │
     │   │ error of a virtual reference   │                 │
     │   │ station based on the first     │                 │
     │   │ original observation and the   │                 │
     │   │ second original observation,   │                 │
     │   │ and determine assisted         │                 │
     │   │ positioning information based  │                 │
     │   │ on the ionospheric error       │                 │
     │   └──────────────────────────────┘ │                 │
     │         S404: Assisted             │                 │
     │      positioning information       │                 │
     │         ├──────────────────────────────────────────►│
     │         │                          │  ┌──────────────┐
     │         │                          │  │ S405: The to- │
     │         │                          │  │ be-positioned │
     │         │                          │  │ device performs│
     │         │                          │  │ positioning    │
     │         │                          │  │ calculation   │
     │         │                          │  │ based on the  │
     │         │                          │  │ assisted      │
     │         │                          │  │ positioning   │
     │         │                          │  │ information   │
     │         │                          │  └──────────────┘
```

FIG. 4

S501A: Each device in at least one mobile device periodically outputs an original observation at a specified time interval

S502A: The at least one mobile device sends a data packet to a network device by using a cellular communications technology, where the data packet carries an original observation of a tri-band GNSS signal and approximate location information

S503A: The network device obtains an $N^{th}$ data packet, and determines whether a distance between a mobile device corresponding to the $N^{th}$ data packet and a virtual reference station is less than a preset distance

N+1

No

S505A: Discard the $N^{th}$ data packet

Yes

S504A: Calculate an ionospheric error based on an original observation in the $N^{th}$ data packet

End

FIG. 5A

S501B: Each of a plurality of mobile devices (including a tri-band mobile device and a dual-band mobile device) periodically outputs an original observation of a GNSS signal of the device at a specified time interval

↓

S502B: Each mobile device sends a data packet to a network device by using a cellular communications technology, where the data packet carries the original observation and approximate location information

↓

N+1

S503B: The network device obtains an $N^{th}$ data packet, and when the $N^{th}$ data packet carries an original observation of a dual-band GNSS signal, the network device determines whether a distance between a mobile device corresponding to the $N^{th}$ data packet and a virtual reference station is less than a preset distance

No → S507B: Discard the $N^{th}$ data packet

Yes ↓

S504B: The network device determines whether an original observation of a tri-band GNSS signal is received within a preset time range

No → S506B: Calculate an ionospheric error based on the original observation (namely, the original observation of the dual-band GNSS signal) in the $N^{th}$ data packet

Yes ↓

S505B: Discard the $N^{th}$ data packet, calculate an ionospheric error based on the original observation of the tri-band GNSS signal received within the preset time range

↓

End

( End )

FIG. 5B

Reference stations 1, 2, and 3

Other reference information

Original observation, accurate location information, and ephemeris information (optional)

Calculate an ionospheric error model

Calculate an ionospheric error of a virtual reference station, and determine assisted positioning information of the virtual reference station

Network device

Original observation and approximate location information

Assisted positioning information

To-be-positioned device

FIG. 6A

Original observations of reference stations 1, 2, and 3

Other reference information

Original observation, accurate location information, and ephemeris information (optional)

At least one mobile device

Original observation and approximate location information

Calculate an ionospheric error model

Calculate an ionospheric error of a virtual reference station, and determine assisted positioning information of the virtual reference station

Network device

Approximate location information of the to-be-positioned device

Assisted positioning information

To-be-positioned device

FIG. 6B

Satellite

Network device

Second
original
observation

Assisted
positioning
information

Satellite
signal

Reference
station

First original
observation

Satellite
signal

Assisted
positioning
information

RSU

First original
observation

Assisted
positioning
information

GNSS
chip

MCU

T-BOX

First original
observation

Vehicle

FIG. 7

**800**

Transceiver module — 801

Processing module — 802

FIG. 8

**900**

Processor — 901

Interface circuit — 902

FIG. 9

## INTERNATIONAL SEARCH REPORT

| International application No. |
|---|
| **PCT/CN2022/116274** |

### A. CLASSIFICATION OF SUBJECT MATTER

G01S19/07(2010.01)i;H04L27/00(2006.01)i

According to International Patent Classification (IPC) or to both national classification and IPC

### B. FIELDS SEARCHED

Minimum documentation searched (classification system followed by classification symbols)

IPC：G01S19/-；H04L27/-

Documentation searched other than minimum documentation to the extent that such documents are included in the fields searched

Electronic data base consulted during the international search (name of data base and, where practicable, search terms used)

CNABS; CNTXT; CNKI; BAIDU: 电离层, 误差, 卫星, 定位, 辅助信息, 基准站, 参考基站, 参考站, 移动设备, 用户设备, 全球导航卫星系统; VEN; USTXT; EPTXT; WOTXT; IEEE: Ionosphere, Error, Satellite, Positioning, Supplementary Information, Reference station, Mobile device, User Equipment, GNSS

### C. DOCUMENTS CONSIDERED TO BE RELEVANT

| Category* | Citation of document, with indication, where appropriate, of the relevant passages | Relevant to claim No. |
|---|---|---|
| X | CN 112327341 A (BEIHANG UNIVERSITY) 05 February 2021 (2021-02-05) description, paragraphs [0006]-[0013], and figure 2 | 12, 21, 23-25 |
| A | CN 103430046 A (TRIMBLE NAVIGATION, LTD.) 04 December 2013 (2013-12-04) entire document | 1-26 |
| A | US 10809388 B1 (SWIFT NAVIGATION, INC.) 20 October 2020 (2020-10-20) entire document | 1-26 |
| A | US 2017070971 A1 (QUALCOMM INC.) 09 March 2017 (2017-03-09) entire document | 1-26 |
| A | WO 2011039457 A1 (CENTRE NATIONAL D'ETUDES SPATIALES et al.) 07 April 2011 (2011-04-07) entire document | 1-26 |

☐ Further documents are listed in the continuation of Box C.    ☑ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 April 2023** | **16 May 2023** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

# EP 4 575 580 A1

| INTERNATIONAL SEARCH REPORT | International application No. |
| Information on patent family members | PCT/CN2022/116274 |

| Patent document cited in search report | | | Publication date (day/month/year) | Patent family member(s) | | | Publication date (day/month/year) |
|---|---|---|---|---|---|---|---|
| CN | 112327341 | A | 05 February 2021 | | None | | |
| CN | 103430046 | A | 04 December 2013 | WO | 2012128980 | A1 | 27 September 2012 |
| | | | | US | 2014002300 | A1 | 02 January 2014 |
| | | | | US | 9709683 | B2 | 18 July 2017 |
| | | | | US | 2014015712 | A1 | 16 January 2014 |
| | | | | US | 9651677 | B2 | 16 May 2017 |
| | | | | EP | 2689265 | A1 | 29 January 2014 |
| | | | | EP | 2689265 | A4 | 03 September 2014 |
| | | | | EP | 2689265 | B1 | 03 July 2019 |
| | | | | EP | 2689266 | A2 | 29 January 2014 |
| | | | | EP | 2689266 | A4 | 03 September 2014 |
| | | | | EP | 2689266 | B1 | 08 May 2019 |
| | | | | WO | 2012128979 | A2 | 27 September 2012 |
| | | | | WO | 2012128979 | A3 | 06 December 2012 |
| US | 10809388 | B1 | 20 October 2020 | US | 2020348422 | A1 | 05 November 2020 |
| | | | | EP | 3963352 | A1 | 09 March 2022 |
| | | | | WO | 2020223684 | A1 | 05 November 2020 |
| | | | | US | 2023030332 | A1 | 02 February 2023 |
| | | | | US | 2022283320 | A1 | 08 September 2022 |
| | | | | US | 11543541 | B2 | 03 January 2023 |
| | | | | JP | 2022530983 | A | 05 July 2022 |
| | | | | KR | 20210152549 | A | 15 December 2021 |
| | | | | US | 2020408926 | A1 | 31 December 2020 |
| | | | | US | 11372114 | B2 | 28 June 2022 |
| US | 2017070971 | A1 | 09 March 2017 | JP | 2018534537 | A | 22 November 2018 |
| | | | | KR | 20180050366 | A | 14 May 2018 |
| | | | | WO | 2017040076 | A1 | 09 March 2017 |
| | | | | EP | 3345018 | A1 | 11 July 2018 |
| | | | | IN | 201827001872 | A | 30 March 2018 |
| | | | | CN | 107949795 | A | 20 April 2018 |
| | | | | CN | 107949795 | B | 14 June 2022 |
| | | | | BR | 112018004362 | A2 | 12 October 2018 |
| WO | 2011039457 | A1 | 07 April 2011 | FR | 2950702 | A1 | 01 April 2011 |
| | | | | FR | 2950702 | B1 | 21 October 2011 |

Form PCT/ISA/210 (patent family annex) (July 2022)